# EUROPEAN PATENT SPECIFICATION

(11) **EP 2 628 275 B1**
(45) Date of publication and mention of the grant of the patent: **05.12.2018**
(21) Application number: 10858468.1
(22) Date of filing: 11.10.2010
(51) Int. Cl.: H04L 29/06, H04L 29/08, H04L 12/28

(54) **ELECTRONIC DEVICE AND METHOD FOR SELECTING A MEDIA RENDERING UNIT**
ELEKTRONISCHE VORRICHTUNG UND VERFAHREN FÜR DIE AUSWAHL EINER MEDIENDARSTELLUNGSEINHEIT
DISPOSITIF ÉLECTRONIQUE ET PROCÉDÉ DE SÉLECTION D'UNE UNITÉ DE RENDU MULTIMÉDIA

(43) Date of publication of application: 21.08.2013
(73) Proprietor: Telefonaktiebolaget LM Ericsson (publ), 164 83 Stockholm (SE)
(72) Inventor: ZALOSHNJA, Farjola, S-169 74 Solna (SE)
(74) Representative: Ericsson
(86) International application number: PCT/SE2010/051093
(87) International publication number: WO 2012/050490

(56) References cited:
- WO-A1-2009/121409
- WO-A2-2007/034431
- US-A1- 2006 168 219
- US-A1- 2009 248 702
- US-A1- 2009 268 754
- US-A1- 2010 150 404
- COLIN SWINDELLS ET AL: "That one there! Pointing to establish device identity", PROCEEDINGS OF THE 15TH ANNUAL ACM SYMPOSIUM ON USER INTERFACE SOFTWARE AND TECHNOLOGY , UIST '02, 1 January 2002 (2002-01-01), page 151, XP055118631, New York, New York, USA DOI: 10.1145/572006.572007 ISBN: 978-1-58-113488-9

## Description

### TECHNICAL FIELD

The invention generally relates to methods for an electronic device and a media aggregating node to select a media rendering unit comprised in a local network environment, as well as to an electronic device and a media aggregating node.

### BACKGROUND

Interoperability between devices in the home environment is steadily increasing. Interoperability aims at facilitating media and content sharing, and to enhance communication between interoperable devices. One example of standardized interoperability between devices in the home environment is the Digital Living Network Alliance (DLNA). DLNA is a standard defined by an industry consortium and aims at allowing entertainment devices within the home to share content with each other across a home network, without requiring a complicated configuration process. DLNA intends to alleviate the problems otherwise inherent in sharing digital media between different consumer electronic devices. For example, a DLNA compliant TV set will be able to play out music, photos or videos stored on a DLNA compatible PC (Personal Computer). Further, DLNA-compatible devices are able to communicate with each other using Unverisal Plug and Play (UPnP), which is a network protocol that is capable of establishing communication between DLNA-compatible devices within a DLNA network, without requiring any configuration processes.

A drawback with DLNA is that its user-friendly set-up mechanism entails decreased security due to the lack of a default authentification mechanism. Further, even though the amount of media content that is available on-demand, e.g on the internet, is increasing, the media exchange in a DLNA network is limited to the local devices within the network and to pre-stored media. Thus, access to the internet, as well as to other external networks, is limited within a DLNA network, and any external network-media has to be downloaded and stored locally on a NAS (Network Attached Storage) or PC in order to be accessible on a DLNA compatible TV or radio receiver within the DLNA network. At the same time, the internet is growing into an established source of media and content, with a wide range of content, media and related services readily available. Content providers are increasingly using the internet as a mean to sell and distribute media and content. From a device unit in a home network environment a user can search for, and access, content and media readily available on other devices and servers connected to the home network. However, it is still a problem to provide content and media from an external network environment, such as the internet, to devices in a local network environment, such as a DLNA network, in an easy and user-friendly way.

Furthermore, a DLNA network may include a wide variety of consumer electronic devices, each having its dedicated and customized user-interface and user-device interaction means. It is not very convenient to use a multitude of dedicated remote-controls to interact with the different consumer electronic devices in a living room environment. Users do not appreciate having to operate and keep track of their numerous remote-controls and they have difficulty of knowing which remote control that is dedicated to which consumer electronic device. Handling a multitude of remote controls becomes even more cumbersome and complex with increased interoperability between consumer devices, e.g., through media and file sharing.

Related art within this technical field is disclosed e.g. in WO 2007/034431, describing control of playback streams, using a remote control device, which is provided with a "most recent" button. Related art is also described in the article by Colin Swindells et al: "That one there! Pointing to establish device identity",PROCEEDINGS OF THE 15TH ANNUAL ACM SYMPOSIUM ON USER INTERFACE SOFTWARE AND TECHNOLOGY , UIST '02, 1 January 2002, page 151, XP055118631,New York, New York, USA DOI: 10.1145/572006.572007ISBN: 978-1-58-113488-9, which describes how to identify a device using a pointing gesture, and in US 2010/0150404, describing calibration of a position sensor using images of a tracked object moved through a path.

Thus, it is still present a problem to provide an intuitive and user-friendly user-device interaction in local network environment, such as a DLNA network, aiming at a high-level of interoperability between devices, such a media and file sharing, not only within the local network environment but also across an external netwmork environement, such a the internet.

### SUMMARY

It is an object of the invention to basically address at least some of the problems outlined above. These objects and others may be obtained by providing method and arrangement according to the independent claims attached below.

An advantage with the present invention is that the electronic device is able to act as pointing device for selecting media rendering units in a local network environment and for media items published by the media aggregating node in a very intuitive way. Further, the electronic device acts as a custom-optimized navigation client, without the restrictions imposed on devices of local network environment. Media items available in the external network do not have to be downloaded locally prior to playing but can be streamed on-demand directly to the media rendering units in the local network environment.
Further possible features and benefits of the invention will become apparent from the detailed description below.

### BRIEF DESCRIPTION OF THE DRAWINGS

For a better understanding of the embodiments described below, and to show more clearly how it may be carried into effect, reference will now be made, by way of illustration only, to the following drawings in which:
Figure 1 is a block diagram schematically illustrating various nodes of the present invention;
Figure 2 is a signaling diagram illustrating the signaling between the nodes of the present invention;
Figure 3 schematically shows how the media rendering units communicate with the media aggregating node through the gateway;
Figure 4 illustratively shows how the electronic device is used to select media rendering units in a local network environment by pointing at them;
Figure 5 illustratively shows an exemplary electronic device;
Figure 6 illustratively shows an exemplary electronic device;
Figure 7 is flow diagram showing an electronic device selecting media items and media rendering units.
Figure 8 is a flow diagram showing an exemplary calibration of position data related to the position of media rendering units;
Figure 9 is flow diagram showing an exemplary embodiment of an electronic device selecting media items and media rendering units;
Figure 10 is flow diagram of an exemplary embodiment showing measurement and use of position data to determine which media rendering is being pointed at;
Figure 11 is a flow diagram showing information received by the electronic device from the media aggregating node;
Figure 12 is a flow diagram showing a media aggregating node handling selected media items and selected media rendering units;
Figure 13 illustratively shows an exemplary media aggregating node.

### DETAILED DESCRIPTION OF THE EMBODIMENTS

Briefly described, the embodiments below can be used for an electronic device to select media rendering units in a local network environment, such as a DLNA network, and to select media to be rendered upon the selected media rendering unit.

In the following description, the invention will be described in more detail with reference to certain example embodiments and to the accompanying drawings. For purpose of explanation and not limitation, specific details are set forth, such as particular scenarios, techniques, etc., in order to provide a thorough understanding of the embodiments.

Moreover, those skilled in the art will appreciate that the functions and means explained herein below may be implemented using software functioning in conjunction with a programmed microprocessor or a general purpose computer, and/or using an application specific integrated circuit (ASIC). It will also be appreciated that while the embodiments are primarily described in the form of methods and devices, the embodiments may also be realized in a computer program product as well as in a system comprising a computer processor and a memory coupled to the processor, wherein the memory is encoded with one or more programs that may perform the functions disclosed herein.

UPnP (Universal Plug-and-Play) is an architecture developed in the multivendor collaboration UPnP Forum, for establishing standardized device protocols for communication in a local network, e.g. a DLNA network, between different devices that may use different access technologies, operating systems, programming languages, format standards and communication protocols. UPnP also supports the process called 'discovery' in which a device can enter a local network, obtain a local IP address, announce its name and IP address, and exchange capabilities and services with other devices within the network.

DLNA (Digital Living Network Alliance) is a standard that defines acquisition, storing and accessing digital media content from devices in a local network. The UPnP protocol is utilized by DLNA as an underlying protocol for communication between DLNA devices within local networks. In this context, the local network often refers to a DLNA network. It is required that DLNA devices support HTTP (Hyper Text Transport Protocol) as a basic transport mechanism for transfer of media across the local network. In addition, RTP (Real Time Protocol) can optionally be used as a media transport, but the mandatory requirements for HTTP must always be supported by the device.

In the following, the term **media rendering unit** is used to represent a device that is capable rendering or playing out media content, and of operating in a local network and communicating with other devices in the local network, e.g. a DLNA network. The term **external network** should be understood as another network outside the local network, and the term **electronic device** is used to represent a device that is capable of communicating with this external network. The media aggregating node is basically a media aggregator that publishes and handles media items from external network media providers. The media aggregating node further controls the media rendering on the media rendering units. According to one exemplary embodiment of the invention, the external network corresponds to the internet, the local network corresponds to a DLNA network, and the electronic device refers to an internet connected mobile phone, but this invention is not limited thereto.

Conventionally, a DLNA network comprises one or more DMS (Digitial Media Storage/Server) for storing media content, and the available media content can be presented to a user on a DMC (Digital Media Controller), typically arranged in the form of a tree structure. Media content stored on the DMS, such as video- or audio-media or pictures, is available and can be played or rendered by the user on a DMP (Digital Media Player) or on a DMR (Digital Media Renderer). The DLNA network communicates with an external network via a gateway. The DMS and the DMC may be implemented in the Gateway.

In this solution, an electronic device, such as internet-connected mobile phone, is used to select a media rendering unit and the associated media content hosted on said external network, via a media aggregating node, and for pushing the external network media directly to a local network compatible media rendering unit, e.g. to a DLNA compatible TV, PC or audio-player. The media aggregating node may comprise one or more media servers, e.g. configured for authenticating users logged in to the electronic device. The electronic device can communicate with the media aggregating node, which, in turn, can communicate with the local network environment, e.g. through the gateway. Thereby, the electronic device is able to function as a custom-optimized navigation client, without the restrictions imposed e.g. by the DLNA/UPnP architecture. Further, the external network-media can be streamed on-demand to the media rendering units, and does not have to be downloaded locally on the DMS prior to playing.

In an exemplary use-case according to one possible embodiment in which the local network is a DLNA network, and the external network is the internet, a user is logged in on an internet connected electronic device, e.g. his mobile phone. Thereafter, the user receives information, on the electronic device, from the media aggregating node regarding media items available from one or more pre-selected internet media content providers. The media items can e.g. be music, movies or popular TV shows and the user selects a media item for rendering on a media rendering unit comprised in the local network, such as e.g. a radio, TV, PC or an MP3 player. The information from the media aggregating node may further comprise a short description, thumbnails and additional metadata related to the media items. Thereafter, the user selects a media rendering unit in the local network to render the selected media item. The user is thus able to select a media rendering unit in his home environment by pointing the electronic device towards the selected unit. In order to detect which media rendering unit the user has selected, the electronic device may comprise sensors that indicate in which direction the electronic device is pointing. The user confirms that the media rendering unit, pointed at, is the media rendering unit selected to render the selected media items. A command to render the selected media on the selected media rendering unit is sent to the media aggregating node, which in turn forwards the command to the gateway of the DLNA network. Further, the user may be able to change various rendering parameters such as change volume, stop and resume playing by sending further control commands to the media aggregating node.

Thus, the solution of operating selected media as described herein can be implemented by means of an electronic device, a media aggregating node, and of at least one media rendering unit, as described below:
In this solution, an electronic device, e. g., a mobile phone, a personal digital assistant (PDA), or a touch-pad, comprises means to detect the pointing direction of the electronic device such that the user of the electronic device can point towards a media rendering unit to select it. The electronic device may comprise suitable sensor units adapted to sense the relative orientation/position, and/or motion of the electronic device, e.g. by means of accelerometers and/or a gyroscope. The sensor units can also be adapted to detect the presence of and/or the strength of a signal (e.g. an RF signal, an IR signal, a visible light signal, an ultrasonic signal, or the like, or combinations thereof) transmitted by any of the media rendering units, which allows the relative position and orientation of the electronic device to be determined. The electronic device is capable of communicating with the media aggregating node and to display media items published by the media aggregating node and thereby enabling the user to select media items using a user input unit, which can e.g. be a touch-screen. Furthermore, by communicating with the media aggregating node the electronic device can send control commands, e.g. to start playing the selected media item on the selected media rendering unit.

As mentioned above, a media aggregating node, e.g. a media aggregator, may comprise one or more media server that are responsible for authenticating the users, for processing any requests and presence messages, for storing data and making user profile available and for handling media and device metadata to be displayed on the electronic device. The media aggregating node is able to communicate with electronic devices, with the local network environment (e.g. via a gateway or DMS), and with media providers via a content data sub-node. The media aggregating node is also able to receive position data from the electronic device and assist the electronic device in determining the relative pointing direction of the electronic device.

A media rendering unit, e.g. a TV, a radio, a MP3 player or gaming console, connected to and comprised within the local network environment and interoperable with other media rendering units of the local network environment, is capable of rendering media published by the media aggregating node.

Other nodes that may be involved in the implementation of the described embodiments include:
A content data-node owned by the internet media content providers, for publishing the available media titles and their respective URL's (Uniform Resource Locator), by communicating with the media aggregating node.

A streaming server-node for providing a media stream to the media rendering units.

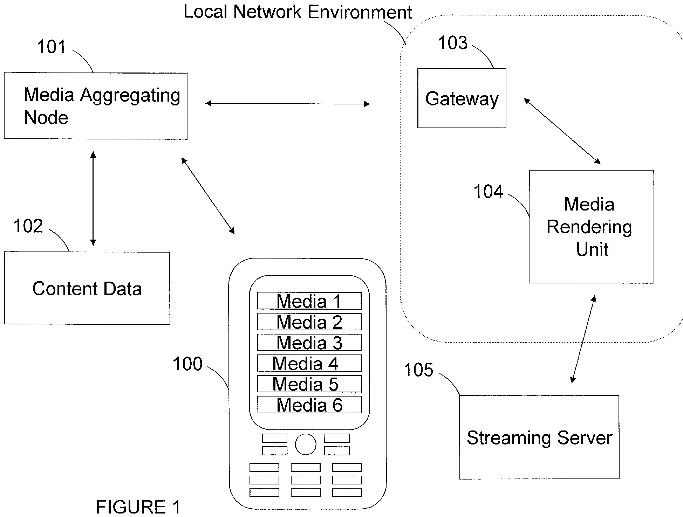

The above described nodes are all illustrated in Fig. 1, which is a block diagram schematically illustrating the nodes when communicating with a local network environment, e.g., a DLNA network. Figure 1 illustrates an electronic device 100, a content data node 102, a media aggregating node 101, a gateway 103, a media rendering unit 104, and a streaming server 105. The media aggregating node publishes and handles media from one or more content providers, and maintains presence information regarding media rendering units present in the local network environment, e.g. in the form of presence information. The content provider(s) can make media items available to the media rendering units by publishing the media items and their respective URLs on the media aggregating node. The media aggregating node communicates with and handles media rendering units in the local network environment, e.g. monitors media rendering units' presence updates, controls media rendering on the media rendering units, and stores rendering capabilities of the media rendering units. The communication between the media aggregating node and the media rendering units is done via the gateway, which comprises a virtual control node and a DMS. When a media item published by the content provider on the media aggregating node is selected to be rendered on a media rendering unit, the content is streamed from the streaming server directly to the media rendering unit. Media rendering units within the local network may also render media available on the DMS, according to standard DLNA/UPnP interoperability. The electronic device communicates with the media aggregating node, e.g. receives presence information regarding media rendering units or receives information regarding media published by the media aggregating node.

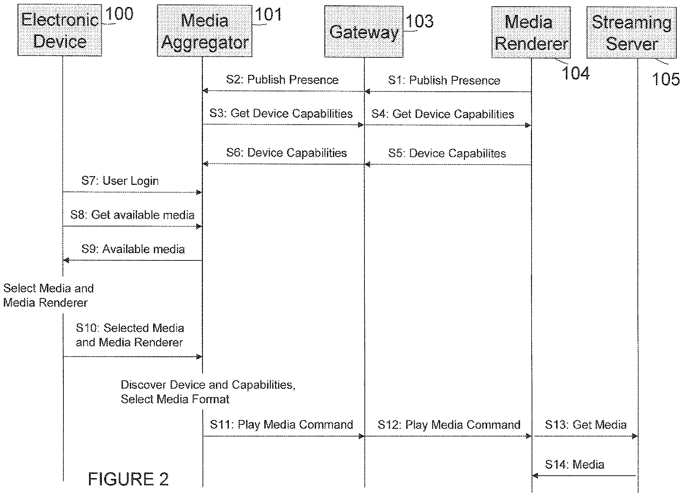

Figure 2 is a signaling diagram illustrating how an electronic device selects a media rendering unit and how internet media items are rendered upon the selected media rendering unit, according to another possible embodiement. In S1, the media rendering unit sends an UPnP Publish to the Gateway comprising presence information, e.g. availability. The Gateway, in turn, forwards the presence information to the Media Aggregating Node, S2. The presence information could also include information about the media rendering unit's device capabilities, e.g. file formats supported by the media rendering unit. Alternatively, the Media Aggregating Node can request device capabilities from the Media Rendering Units via the Gateway, as illustrated in steps S3-S6. The media aggregating can also request the device capabilities from media rendering units when needed, e.g. when a media rendering unit is selected by a user, or the device capabilities can be requested when the media rendering is added to the DLNA network, e.g. upon switch-on. In S7, the electronic device logs in to the media aggregating node by sending user name and password. In another step S9 the media aggregating node sends information regarding media items published by the media aggregating node to the electronic device after having received it from the content provider via the content data node. Likewise the media aggregating node may publish media available on the Gateway (DMS) which can be rendered on the media rendering units. The media aggregating node can send the information either upon a request from the electronic device, S8, or send the information to the electronic device upon an event trigger, e.g. when the electronic device logs in or in connection with a location update or device switch on. Once the user has received the information about available media he selects a media item that he wishes to render and selects a media rendering unit by pointing towards it using the electronic device, hence the electronic device acts much like a pointing device, and an elementary version of the electronic device would be a lazy-bone remote control. In S10, the electronic device sends information to the media aggregating node regarding which media item has been selected by the user to be rendered and regarding which media rendering unit has been selected to render the selected media item. The media aggregating node matches the selected media item with the selected media rendering unit, which may include choosing a proper encoding profile of the selected media items. Alternatively, if the playback capabilities of the selected media rendering unit is not compatible with the selected media item then the media aggregating node checks the playback capabilities of other media rendering units in the DLNA network and sends information to the electronic device indicating that the local network includes a media rendering unit better suited to render the selected media item. After having received a control command from the electronic device, the media aggregating nodes issues the control command and sends it to the gateway (or to the virtual control node comprised in the gateway) in S11. The control command can e.g. be a play (UPnP play), stop or resume playing command. The control command is then forwarded to the selected media rendering unit, S12. In S13 and S14, the media rendering unit obtains the media stream associated with the selected media item from the streaming server, and issues an UPnP Publish, not shown, with play status to the Gateway (virtual control node). The Gateway, in turn, forwards the updated presence, not shown, to the media aggregating node.

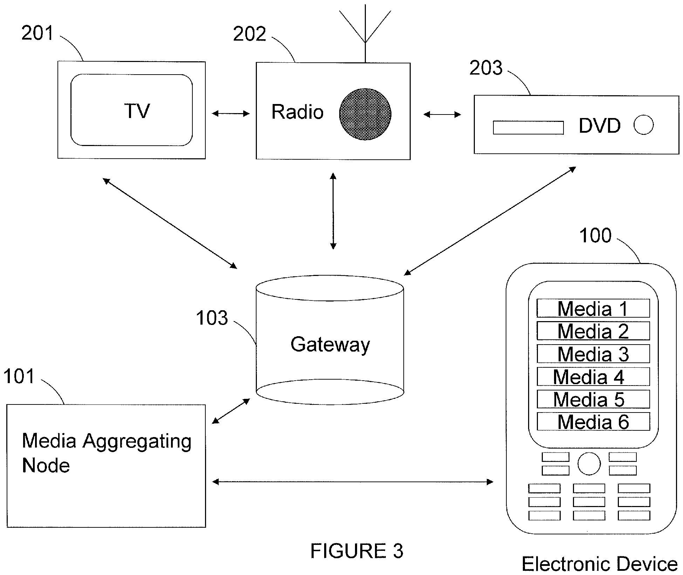

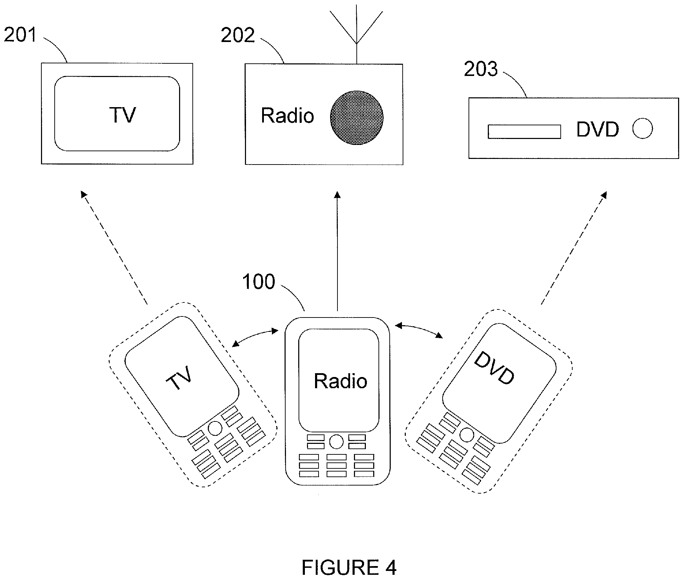

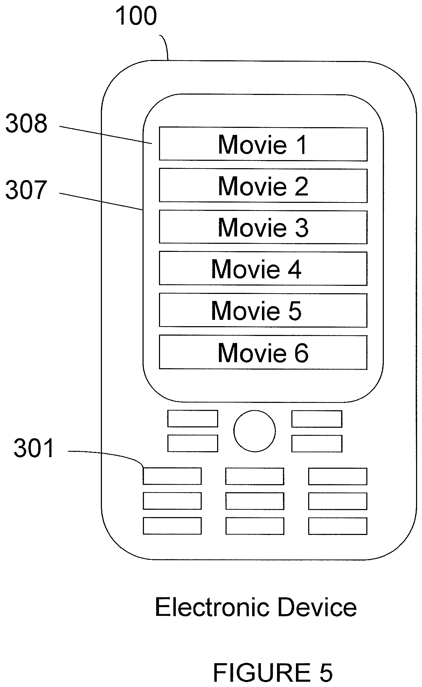

Figure 3 and 4 schematically show different media rendering units (in the illustrative embodiment a TV 201, a Radio 202, and a DVD player 203) in a local network environment, e.g. a DLNA network. The user logs in to the media aggregating node from the electronic device, e.g. his mobile phone, which includes a display and a touch-screen, as shown in Figure 5, and receives a list of media items from the media aggregating node. The user may either request the list or the media aggregating node may automatically send the list when the user logs in or in response to another trigger event, e.g. location update or electronic device switch-on. The list appears on the display of his mobile phone and he selects a media item, for example a movie in a HD (high definition) format, by touching the movie thumbnail. The touch is registered as a user command by the touch-screen. The user may be present in his living room environment and chooses to watch the HD movie on his living room TV. He points the mobile phone towards the TV to select it to render the HD movie. A sensor unit inside the mobile phone, e.g. an accelerometer and/or a gyroscope measures sensor data that allows determination of the relative pointing direction of the mobile phone and hence towards which media rendering unit the user is pointing at. At a previous instance, e.g. when switching on his mobile phone the user might already have calibrated the relative position of the media rendering units from a fixed position by pointing the mobile phone towards each media rendering unit and storing the respective sensor data. The mobile phone may store the sensor data in a storage unit included in the mobile phone or may send the sensor data to the media aggregating node to be stored in a storage unit included in the media aggregating node. Then, by comparing the stored sensor data with the measured sensor data reading it is possible to determine towards which media rendering unit the user is pointing the mobile phone towards. The mobile phone sends information about the selected media item and the selected media rendering unit to the media aggregating node, which in turn forwards this information to the gateway, which in turns addresses the media rendering unit, such that the selected media item is rendered upon the selected media rendering unit. When the TV is selected, the media aggregating node updates the user interface displayed on the mobile phone to the user interface of the TV, as shown in illustratively in Fig. 4. In this way the user can control the TV from the mobile phone using the TVs own user interface, e.g. to stop, resume play, fast-forward or adjust volume or other user commands directed to handling or controlling media rendering upon the media rendering unit. Furthermore, if the TV in the living room is not a HD compatible (i.e. it is not adapted the render movies in full HD), then the media aggregating node may check to if there is an another media rendering unit in the DLNA network that has Full HD rendering capabilities and may in that case suggest the user to render the HD movie on that media rendering unit instead. I.e. the media aggregating node matches the selected media item with the playback capabilities of the selected media rendering unit. If the selected media rendering unit is unable to render the selected media item the user is informed. If there is a media rendering unit that has playback (rendering) capabilities better suited to render the selected media item the user is suggested to render the selected media item on the media rendering unit which offer playback capabilities commensurate with the selected media item.

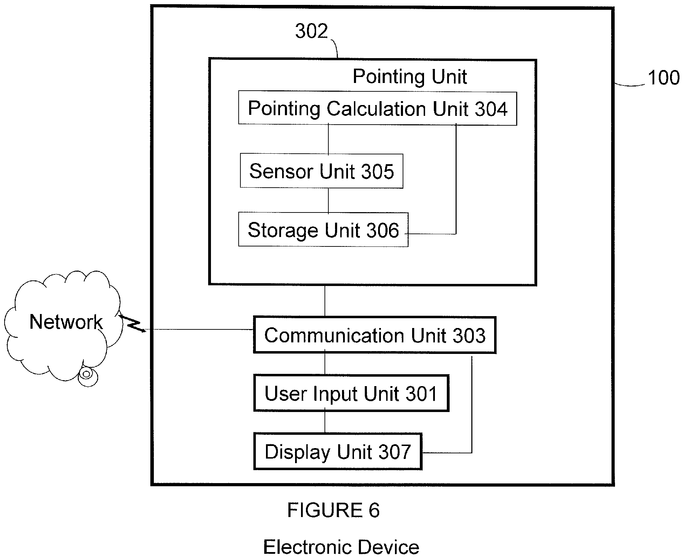

Figure 5 illustratively shows an electronic device 100, e.g. a mobile phone when displaying various media items that can be selected by the user. Figure 6 schematically illustrates in more detail an exemplary electronic device 100, e.g. a mobile phone, a PDA, a e-book, a tablet computer etc, according to this invention, that can be used for this solution. The electronic device 100 is provided with a communication unit 303 for communicating with the media aggregating node over an external network. The communication unit further comprises a sender and a receiver, not shown. The sender is arranged to send, to the media aggregating node 104, user selections of media items and media rendering units, user commands associated with controlling media items upon the selected media rendering units, and sensor data measured by the sensor unit 305. The receiver is arranged to receive presence information regarding media rendering units from the media aggregating node. The receiver is further arranged to receive information about media items, and indications of which media rendering unit the electronic device is pointing at, information about the user interface of the selected media rendering unit from the media aggregating node. Further, the receiver is arranged to receive information from the media aggregating node regarding whether the user selected media items is compatible with the playback capabilities of the selected media rendering unit. The display unit 307 is arranged to display information about media items published and controlled by the media aggregating node, media rendering units presence information, and to display a user interface, which may be adapted to the user interface of the selected media rendering unit. The electronic device is further provided with a user input unit 301 configured to register user inputs or user selections e.g. user commands associated with managing media on the media rendering unit and/or for registering user confirmation that the media rendering unit pointed at is selected to render the selected media. The user input unit may e.g. comprise a touch-screen unit 308, soft keys, hard keys, push-buttons, sensors for user gesture detection etc. The electronic device further comprises a pointing unit 302 configured to determine whether the electronic device 100 is substantially pointing at a media rendering unit 104. The pointing unit 302 may further comprise a pointing calculation unit, sensor unit 305 and a storage unit 306. The sensor unit 305 is configured to measure position data indicating whether the electronic device 100 is substantially pointing at a particular media rendering unit 104. The sensor unit may comprise sensors adapted to measure the relative orientation/position, and/or motion of the electronic device such as e.g. accelerometers and/or gyroscopes. The sensor units may also comprise sensors adapted to detect the presence of and/or the strength of signal (e.g. an RF signal, an IR signal, a visible light signal, an ultrasonic signal, or the like, or combinations thereof) transmitted by one of the media rendering units, which allows the relative position and orientation of the electronic device to be determined. The sensor unit may also comprise actuators that transmits a signal (e.g. an RF signal, an IR signal, a visible light signal, an ultrasonic signal, or the like, or combinations thereof) that can be detected by sensors mounted in the living room environment or by the media rendering units, thereby allowing the relative position/orientation of the electronic device to be determined (cf. e.g. a lazy-bone remote control which transmits modulate IR light that is detected using a receiver (photodiode) mounted on the TV). The storage unit 306 is configured to store position data measured by the sensor unit (306) and may comprise a memory unit such as a semiconductor random access memory (RAM) or magnetic hard disk type storage. The pointing calcuation unit (304) is configured to calculate or determine, using position data, whether a media rendering unit is substantially pointed at, e.g. the pointing calculation unit compares reference position data stored in the storage unit 306 or received from the media aggregating node (where the position data was stored in the storage unit 1003) with second position data being measured by the sensor unit.

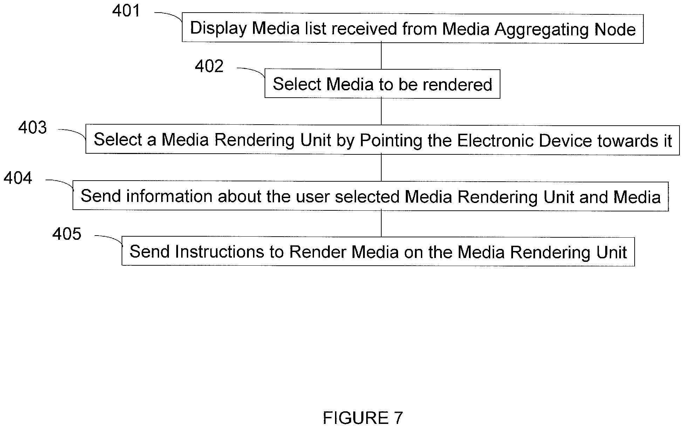

Figure 7 is flow chart diagram showing a procedure in an electronic device for controlling media items, published and controlled by the media aggregating node, in a media rendering unit. The electronic device logs in to the media aggregating node and receives a list of media items from the media aggregating node. The list is displayed to the user of the electronic device using the display unit, step 401. Then, when the user selects a media item, the user input command is registered, using the user input unit, indicating the user selected media item to be rendered on a media rendering unit, step 402. Thereafter, the user points the electronic device towards a media rendering unit to select it, and the user selection of a media rendering unit is registered, at least in part, by determining that the electronic device is substantially pointing at the media rendering using the pointing unit, step 403. The user may receive an indication from the electronic device that he is pointing the electronic device towards the media rendering unit and the user then confirms that the media rendering unit, pointed at, is selected to render the selected media item. E.g. a message may appear on the display unit reading 'You are pointing toward the TV. Do you wish to select the TV?' whereby the user confirms or rejects the TV as the selected media rendering unit. Finally, the electronic device sends information about the user selected media rendering unit and about the user selected media item and instructions to render the selected media item on the selected media rendering unit to the media aggregating node, step 404, 405.

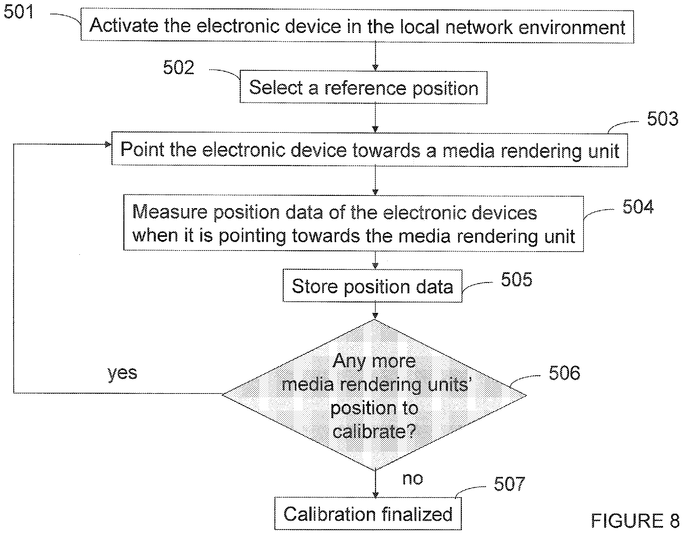

Figure 8 shows a flow diagram illustrating a calibration procedure. The user may use the electronic device to calibrate, from a fixed position, the relative position or direction of the media rendering units included in the local network. The user may chose to perform the calibration at random or the calibration may be triggered by an event e.g. switch-on of the electronic device, location triggered, time triggered etc. The electronic device is activated in the local network, step 501. Then the electronic device is brought to a reference position, step 502, from which the direction and position data of media rendering units included in the local network environment are calibrated. From the reference position the electronic device is pointed by the user towards a media rendering unit, step 503, and measures position data using the sensor unit, step 504. The position data may e.g. be readings from accelerometer and/or gyroscope comprised in the sensor unit. Position data may also be presence of and/or the strength of signal (e.g. an RF signal, an IR signal, a visible light signal, an ultrasonic signal, or the like, or combinations thereof) transmitted or received by one of the media rendering units, which allows the relative position and orientation of the electronic device to be determined. The position data can be stored in the storage unit 306 of the electronic device or the position data may be sent to the media aggregating node where the position data can stored in the storage unit 1003 of the media aggregating node, step 505. If it is determined in step 506 that there are more media rendering unit positions to calibrate, the calibration procedure of steps 503-506 is repeated until position data for all media rendering units comprised in the local network environment have been measured and stored, and the calibration can be finalized in a step 507.

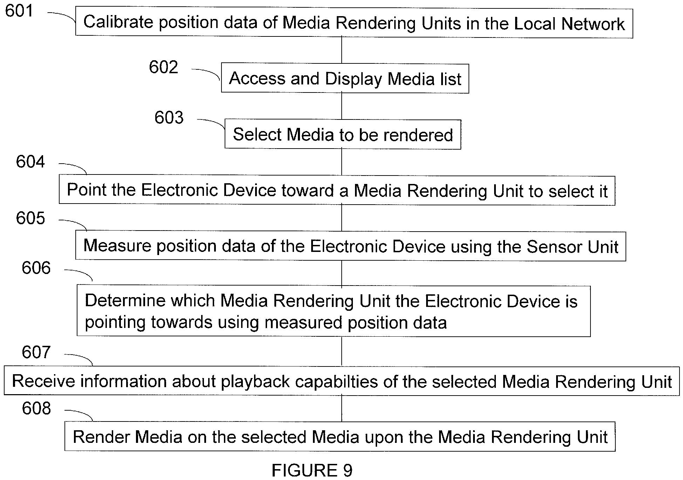

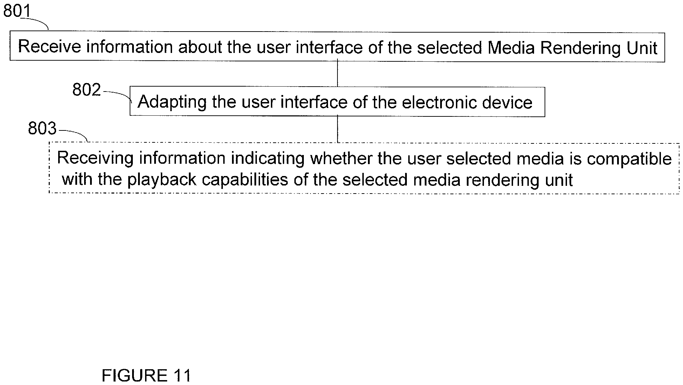

Figure 9 is a flow chart showing a procedure in the electronic device when selecting media items published by the media aggregating node and selecting a media rendering unit in the DLNA network. In step 601, position data of the media rendering units in the DLNA network are calibrated, e.g. as described for Fig. 8. This calibration step includes pointing the electronic device towards the media rendering units and measuring position data using the sensor unit. In step 602, the electronic device receives a list of media items published and controlled by the media aggregating node, and the user selects a media item to be rendered, step 603. After selecting a media item the user selects a media rendering unit comprised in the DLNA network to render the selected media items. The electronic device is pointed towards the media rendering unit by the user to select it, step 604. The sensor unit measure position data of the electronic device, step 605. To determine which media rendering unit the user is pointing at, the position data measured while pointing the electronic device towards the media rendering unit is compared with reference position data measured during the calibration step (step 601), step 606. If it is determined that the electronic device is pointing towards a particular media rendering unit, then the user may confirm that the media rendering unit pointed at is selected to render the selected media item. Furthermore, the media aggregating node sends information about the selected media rendering unit to the electronic device, e.g. the media aggregating node can send information about the rendering (playback) capabilities of the selected media rendering unit to the electronic device, step 607. Figure 11 shows other examples of information about the selected media rendering unit that the media aggregating sends to the electronic device. The media aggregating node can also send information about the user interface of the selected media rendering unit to the electronic device, step 801. The electronic device receives information about the user interface of the selected media rendering unit from the media aggregating node and the user interface of the electronic device displayed on the display unit is adapted such that it resembles the user interface of the selected media rendering unit, step 802. In such way the user can handle media items (play, stop, resume, audio and image adjustments) on the electronic device using the user interface of the media rendering unit. Furthermore, the media aggregating node sends information about the playback compatibility between the selected media items and the selected media rendering unit, step 803, to the electronic device.

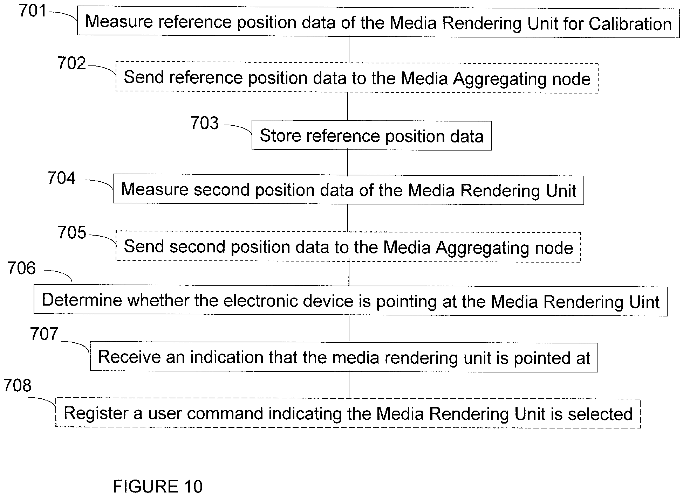

Figure 10 is a flow chart showing in more detail another possible embodiment of a procedure in the electronic device. During calibration of the position of the media rendering units as performed in step 601, in the example of Fig.9, reference position data is measured using the sensor unit, step 701. The reference position data needs to be stored for later comparison. Therefore, the reference position data is sent to the media aggregating node, step 702, where it is are stored in the storage unit of the media aggregating node, step 703. Alternatively, reference position data is stored in the storage unit of the electronic device, step 703. When the user points the electronic device towards a media rendering unit the sensor unit measures second position data, step 704. The second position data can be sent to the media aggregating node, step 705. The second position data is then compared to the reference position data to determine whether a media rendering unit is being pointed at, step 706. If it is determined that the user is pointing at a particular media rendering unit, then user is notified of this. If the comparison between reference and second position data was done by the pointing calculation unit 1001 included in the media aggregating node then the media aggregating sends information to the electronic device that the media rendering unit is being pointed at, step 707. Once the user is notified that he is pointing at a media rendering unit, either by information received from the media aggregating node or from the pointing calculation unit 304 included in the electronic device, step 707, he can acknowledge that the media rendering unit he is pointing the electronic device towards is indeed the selected one. E.g. the electronic device may display a message on the display which states the electronic device is pointing at the TV, or there may be a voice message saying that the TV is being pointed at. The user then confirms by touching the touch-screen, by a voice input, or by a gesture or the like, indicating that the media rendering unit pointed at is selected by the user, step 708.

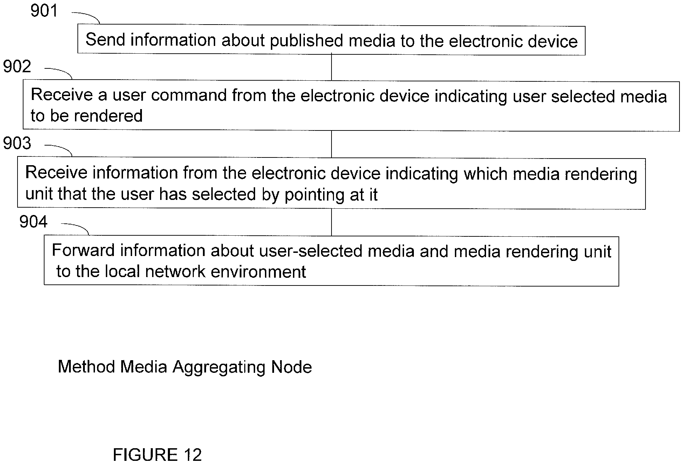

Figure 12 is a flow chart showing in a media aggregating node handling media items in a media rendering unit by communicating with the local network environment, e.g. a DLNA network, and with the electronic device. In step 901, the media aggregating node sends information to the electronic device about media items published and controlled by the media aggregating node. In step 902, the media aggregating node receives information from the electronic device regarding a user command indicating a user selected media item. In step 903, the media aggregating node receives information from the electronic device indicating which media rendering unit that the user has selected by pointing at it. Finally, in step 904, the media aggregating node forwards the information to the local network, via the gateway, about the selected media item and the media rendering unit selected. Furthermore, step 904, may also include instructions to render the selected media item on the selected media rendering unit.

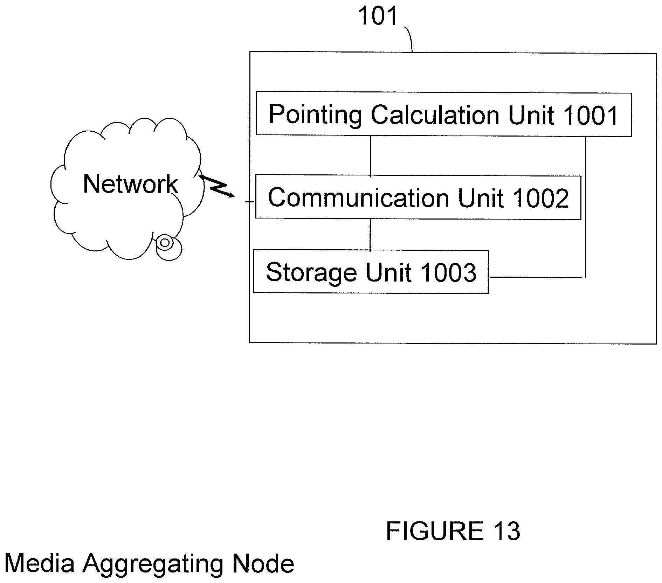

Figure 13 schematically illustrates an exemplary media aggregating node, according to another possible embodiment. The media aggregating node 101 comprises a communication unit 1002 for communicating with the electronic device, not shown, and with the local network environment, said communication unit comprises a receiver, not shown, arranged to receive information from the electronic device 100, indicating user selected media items and the media rendering units selected to render user selected media, where the media rendering units are selected by at least partly by pointing the electronic device 100 towards them. The receiver is further arranged to receive position data measured using the sensor unit 305, comprised in the electronic device 100, and to receive information from the local network environment, via the gateway, about playback capabilities of the media rendering units. The sender is arranged to send information regarding published media to the electronic device. The sender is further arranged to send a command to the local network environment, via the gateway, said command being associated with the selected media rendering unit and rendering the user selected media upon it. The sender is further arranged to send information to the electronic device 100 indicating that the media rendering unit is being pointed at. The sender is further arranged to send information regarding the selected media rendering unit to the electronic device, the information can comprise information regarding the user interface of the selected media rendering unit, such that the user interface of the electronic device 100 can be adapted to the user interface of the selected media rendering unit, or regarding playback capabilities of the media rendering units. The media aggregating node 101 further comprises a pointing calculation unit 1001 and a storage unit 1003. The storage unit 1003 is arranged to store position data received from the electronic device and the pointing calculation unit 1001 is arranged to calculate, using position data, whether the electronic device 100 is substantially pointing at the media rendering unit.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfill the functions of several units recited in the claims. Any reference signs in the claims shall not be construed so as to limit their scope.

## Claims

1. A method for an electronic device (100) connected to a media aggregating node (101), for selecting a media rendering unit (104) connected to a local network environment and for selecting media items published by the media aggregating node (101), the method comprising:
- displaying (401) information, received from the media aggregating node (101), regarding published media items, on a display unit (307) of the electronic device (100);
- registering (402) a user input command, using a user input unit (301), indicating a user selected media item;
- registering (403) a user selection of a media rendering unit (104) by determining, using a pointing unit (302), that the electronic device (100) is substantially pointing at the media rendering unit (104), wherein the determining comprises measuring (605), using a sensor unit (305) comprised in the pointing unit (302), sensor data that allows determination of the relative pointing direction of the electronic device (100) and hence towards which media rendering unit (104) the user is pointing;
- sending (405) instructions to render the selected media item on the selected media rendering unit to the media aggregating node (101);
- receiving (801) information about the user interface of the selected media rendering unit (104) from the media aggregating node (101); and
- adapting (802) the user interface displayed on the display unit (307) of the electronic device (100) to the user interface of the selected media rendering unit (104) using information received from the media aggregating node (101).

2. A method as claimed in claim 1, further comprising:
- calibrating (601) the relative position of the media rendering unit and one or more further media rendering units (104) from a fixed position by measuring reference sensor data while the electronic device (100) is pointed towards each of the media rendering unit and the one or more further media rendering units (104); and
- storing the respective reference sensor data.

3. A method as claimed in claim 2, wherein the determining that the electronic device (100) is substantially pointing at the media rendering unit (104) comprises:
- comparing the stored reference sensor data with the measured sensor data to determine towards which one of the media rendering units comprising the media rendering unit and the one or more further media rendering units (104) the electronic device (100) is pointing.

4. A method as claimed in any of the claims 2-3, further comprising:
- sending (705) the reference sensor data to the media aggregating node (101) where it is stored;
- sending the measured sensor data to the media aggregating node (101) where it is compared with the stored reference sensor data to determine towards which one of the media rendering units comprising the media rendering unit and the one or more further media rendering units (104) the electronic device (100) is pointing; and
- receiving (707) an indication from the media aggregating node (101) that the electronic device (100) is pointing at the media rendering unit (104).

5. An electronic device (100) arranged to select a media rendering unit (104), connectable to a local network environment and connectable to a media aggregating node (101) configured to publish media items to be rendered on a media rendering unit (104), the electronic device (100) comprising:
- a pointing unit (302), configured to determine whether the electronic device (100) is substantially pointing at the media rendering unit (104), wherein the determining comprises measuring (605), using a sensor unit (305) comprised in the pointing unit (302), sensor data that allows determination of the relative pointing direction of the electronic device (100) and hence towards which media rendering unit (104) the user is pointing;
- a communication unit (303) configured to send (405) instructions to render a selected media item on the selected media rendering unit to the media aggregating node (101) and receive information about the user interface of the selected media rendering unit (104) from the media aggregating node (101);
- a user input unit (301), configured to register user input commands associated with controlling media on the user selected media rendering unit;
- a display unit (307) configured to display a user interface, wherein the user interface is adapted to the user interface of the selected media rendering unit (104) using the information received from the media aggregating node (101); and
wherein the media rendering unit (104) is selected by pointing the electronic device (100) towards the media rendering unit (104).

6. An electronic device (100) as claimed in claim 5, wherein the user pointing unit (301) is further configured to:
- calibrate the relative position of the media rendering unit and one or more further media rendering units (104) from a fixed position by measuring reference sensor data while the electronic device (100) is pointed towards each of the media rendering unit and the one or more further media rendering units (104); and
- storing the respective reference sensor data.

7. An electronic device (100) as claimed in any of claims 6, wherein the pointing unit (302) is configured to determine whether the electronic device (100) is substantially pointing at the media rendering unit by:
- comparing the stored reference sensor data with the measured sensor data to determine towards which one of the media rendering units comprising the media rendering unit and the one or more further media rendering units (104) the electronic device (100) is pointing.

8. An electronic device (100) as claimed in any of claims 5-7, wherein the communication unit (305) is configured to:
- send the measured sensor data to the media aggregating node (101) where it is compared with the stored reference sensor data to determine towards which one of the media rendering units comprising the media rendering unit and the one or more further media rendering units (104) the electronic device (100) is pointing; and
- receive (707) an indication from the media aggregating node (101) that the electronic device (100) is pointing at the media rendering unit (104).

9. A method for a media aggregating node (101) connected to an electronic device (100) and to a local network environment, for handling user selected media items in a user selected media rendering unit (104) connected to the local network environment, the method comprising:
- sending (901) information regarding published media items to the electronic device (100);
- receiving information (902, 903), from the electronic device (100), about a user selection of a media rendering unit and of a media item;
- sending (904) a command to the local network environment, instructing the selected media rendering unit to render the user selected media item; and
- sending information regarding the selected media rendering unit (104) to the electronic device (100), comprising information (801) regarding the user interface of the selected media rendering unit, enabling adapting the user interface of the electronic device (100) to the user interface of the selected media rendering unit using the information received from the media aggregating node (101).

10. A method as claimed in claim 9, wherein the receiving information about a user selection of a media rendering unit and of a media item comprises
- receiving (705) sensor data measured using the sensor unit (305) comprised in the electronic device (100), said measured sensor data comprising information indicating whether the electronic device (100) is substantially pointing at the media rendering unit (104); and
- determining (706), using the measured sensor data, whether the electronic device (100) is substantially pointing at the media rendering unit (104).

11. A method as claimed in claim 10, further comprising:
- receiving (702) reference sensor data from a calibration of the relative direction of the media rendering unit (104) from a reference position of the electronic device (100);
- storing (703) the received reference sensor data in a storage unit (1003);
- receiving (705) measured sensor data from the electronic device (100); and
- comparing (706) the measured sensor data with stored reference sensor data using the pointing calculation unit (1001), wherein it is determined that the electronic device (100) is substantially pointing at the media rendering unit (104) if the measured sensor data substantially corresponds to the reference sensor data.

12. A media aggregating node (101) connectable to a local network environment and to an electronic device (100) and arranged to publish media items for rendering in a media rendering unit, said media rendering unit connectable to a local network environment, the media aggregating node (101) comprising:
- a communication unit (1002) for communicating with the electronic device (100), the communication unit arranged to:
- send information regarding published media items to the electronic device (100);
- receive information, from the electronic device (100), regarding a user selection of a media rendering unit (104) and of a media item;
- send a command to the local network environment, instructing the selected media rendering unit to render the user selected media item; and
- send information regarding the selected media rendering unit (104) to the electronic device (100), comprising information (801) regarding the user interface of the selected media rendering unit, enabling adapting the user interface of the electronic device (100) to the user interface of the selected media rendering unit using the information received from the media aggregating node (101).

13. A media aggregating node (101) according to claim 12, wherein the communication unit (1002) is arranged to receive information regarding a user selection of a media rendering unit (104) and of a media item by:
- receiving measured sensor data from the sensor unit (305) of the electronic device (100), the measured sensor data comprising information indicating whether the electronic device (100) is substantially pointing at the media rendering unit (104); and
- determining, using the measured sensor data, whether the electronic device (100) is substantially pointing at the media rendering unit (104).

14. A media aggregating node (101) according to claim 13, wherein the communication unit (1002) is further arranged to:
- receive reference sensor data from a calibration of the relative direction of the media rendering unit (104) from a reference position of the electronic device (100);
- storing the received reference sensor data in a storage unit (1003);
- receiving measured sensor data from the electronic device (100); and
- comparing the measured sensor data with stored reference sensor data using the pointing calculation unit (1001), wherein it is determined that the electronic device (100) is substantially pointing at the media rendering unit (104) if the measured sensor data substantially corresponds to the reference sensor data.

## Patentansprüche

1. Verfahren für eine elektronische Vorrichtung (100), die mit einem Mediensammelknoten (101) verbunden ist, zum Auswählen einer Medienwiedergabeeinheit (104), die mit einer lokalen Netzwerkumgebung verbunden ist, und zum Auswählen von Medienartikeln, die durch den Mediensammelknoten (101) veröffentlicht werden, das Verfahren umfassend:
- Anzeigen (401) von Informationen, die vom Mediensammelknoten (101) empfangen werden, bezüglich veröffentlichter Medienartikel auf einer Anzeigeeinheit (307) der elektronischen Vorrichtung (100);
- Registrieren (402) eines Benutzereingabebefehls, unter Verwendung einer Benutzereingabeeinheit (301), die einen vom Benutzer gewählten Medienartikel angibt;
- Registrieren (403) einer Benutzerauswahl einer Medienwiedergabeeinheit (104) durch Bestimmen, unter Verwendung einer Zeigeeinheit (302), dass die elektronische Vorrichtung (100) im Wesentlichen zur Medienwiedergabeeinheit (104) zeigt, wobei die Bestimmung ein Messen (605), unter Verwendung einer Sensoreinheit (305), die in der Zeigeeinheit (302) enthalten ist, von Sensordaten umfasst, die eine Bestimmung der relativen Zeigerichtung der elektronischen Vorrichtung (100), und somit auf welche Medienwiedergabeeinheit (104) der Benutzer zeigt, erlauben;
- Senden (405) von Anweisungen zur Wiedergabe des ausgewählten Medienartikels auf der ausgewählten Medienwiedergabeeinheit zum Mediensammelknoten (101);
- Empfangen (801) von Informationen bezüglich der Benutzerschnittstelle der ausgewählten Medienwiedergabeeinheit (104) vom Mediensammelknoten (101); und
- Anpassen (802) der Benutzerschnittstelle, die auf der Anzeigeeinheit (307) der elektronischen Vorrichtung (100) angezeigt wird, an die Benutzerschnittstelle der ausgewählten Medienwiedergabeeinheit (104) unter Verwendung von Informationen, die vom Mediensammelknoten (101) empfangen werden.

2. Verfahren nach Anspruch 1, ferner umfassend:
- Kalibrieren (601) der relativen Position der Medienwiedergabeeinheit und einer oder mehrerer weiterer Medienwiedergabeeinheiten (104) von einer unveränderlichen Position durch Messen von Referenzsensordaten, während die elektronische Vorrichtung (100) zu jeder der Medienwiedergabeeinheit und der einen oder mehreren Medienwiedergabeeinheiten (104) zeigt; und
- Speichern der jeweiligen Referenzsensordaten.

3. Verfahren nach Anspruch 2, wobei das Bestimmen, dass die elektronische Vorrichtung (100) im Wesentlichen zur Medienwiedergabeeinheit (104) zeigt, umfasst:
- Vergleichen der gespeicherten Referenzsensordaten mit den gemessenen Sensordaten um zu bestimmen, zu welcher der Medienwiedergabeeinheiten, die die Medienwiedergabeeinheit und die eine oder die mehreren weiteren Medienwiedergabeeinheiten (104) umfassen, die elektronische Vorrichtung (100) zeigt.

4. Verfahren nach einem der Ansprüche 2 bis 3, ferner umfassend:
- Senden (705) der Referenzsensordaten zum Mediensammelknoten (101), wo sie gespeichert werden;
- Senden der gemessenen Sensordaten zum Mediensammelknoten (101), wo sie mit den gespeicherten Referenzsensordaten verglichen werden, um zu bestimmen, zu welcher der Medienwiedergabeeinheiten, die die Medienwiedergabeeinheit und die eine oder die mehreren weiteren Medienwiedergabeeinheiten (104) umfassen, die elektronische Vorrichtung (100) zeigt; und
- Empfangen (707) einer Angabe vom Mediensammelknoten (101), dass die elektronische Vorrichtung (100) zur Medienwiedergabeeinheit (104) zeigt.

5. Elektronische Vorrichtung (100), die angeordnet ist, eine Medienwiedergabeeinheit (104) auszuwählen, die mit einer lokalen Netzwerkumgebung verbunden werden kann und mit einem Mediensammelknoten (101) verbunden werden kann, der konfiguriert ist, Medienartikel zu veröffentlichen, die auf der Medienwiedergabeeinheit (104) wiedergegeben werden sollen, wobei die elektronische Vorrichtung (100) umfasst:
- eine Zeigeeinheit (302), die konfiguriert ist zu bestimmen, ob die elektronische Vorrichtung (100) im Wesentlichen zur Medienwiedergabeeinheit (104) zeigt, wobei die Bestimmung ein Messen (605), unter Verwendung einer Sensoreinheit (305), die in der Zeigeeinheit (302) enthalten ist, von Sensordaten umfasst, die eine Bestimmung der relativen Zeigerichtung der elektronischen Vorrichtung (100), und somit auf welche Medienwiedergabeeinheit (104) der Benutzer zeigt, erlauben;
- eine Kommunikationseinheit (303), die konfiguriert ist zum Senden (405) von Anweisungen zur Wiedergabe eines ausgewählten Medienartikels auf der ausgewählten Medienwiedergabeeinheit zum Mediensammelknoten (101) und Empfangen von Informationen bezüglich der Benutzerschnittstelle der ausgewählten Medienwiedergabeeinheit (104) vom Mediensammelknoten (101);
- eine Benutzereingabeeinheit (301), die konfiguriert ist zum Registrieren von Benutzereingabebefehlen, die mit einer Steuerung von Medien auf der vom Benutzer gewählten Medienwiedergabeeinheit verknüpft sind;
- eine Anzeigeeinheit (307), die zum Anzeigen einer Benutzerschnittstelle konfiguriert ist, wobei die Benutzerschnittstelle an die Benutzerschnittstelle der Medienwiedergabeeinheit (104) unter Verwendung der Informationen angepasst ist, die vom Mediensammelknoten (101) empfangen werden; und
wobei die Medienwiedergabeeinheit (104) ausgewählt wird, indem die elektronische Vorrichtung (100) auf die Medienwiedergabeeinheit (104) zeigt.

6. Elektronische Vorrichtung (100) nach Anspruch 5, wobei die Benutzerzeigeeinheit (301) ferner konfiguriert ist zum:
- Kalibrieren der relativen Position der Medienwiedergabeeinheit und einer oder mehrerer weiterer Medienwiedergabeeinheiten (104) von einer unveränderlichen Position durch Messen von Referenzsensordaten, während die elektronische Vorrichtung (100) zu jeder der Medienwiedergabeeinheit und der einen oder mehreren Medienwiedergabeeinheiten (104) zeigt; und
- Speichern der jeweiligen Referenzsensordaten.

7. Elektronische Vorrichtung (100) nach Anspruch 6, wobei die Zeigeeinheit (302) konfiguriert ist zu bestimmen, ob die elektronische Vorrichtung (100) im Wesentlichen zur Medienwiedergabeeinheit (104) zeigt, durch:
- Vergleichen der gespeicherten Referenzsensordaten mit den gemessenen Sensordaten um zu bestimmen, zu welcher der Medienwiedergabeeinheiten, die die Medienwiedergabeeinheit und die eine oder die mehreren weiteren Medienwiedergabeeinheiten (104) umfassen, die elektronische Vorrichtung (100) zeigt.

8. Elektronische Vorrichtung (100) nach einem der Ansprüche 5 bis 7, wobei die Kommunikationseinheit (305) konfiguriert ist zum:
- Senden der gemessenen Sensordaten zum Mediensammelknoten (101), wo sie mit den gespeicherten Referenzsensordaten verglichen werden, um zu bestimmen, zu welcher der Medienwiedergabeeinheiten, die die Medienwiedergabeeinheit und die eine oder die mehreren weiteren Medienwiedergabeeinheiten (104) umfassen, die elektronische Vorrichtung (100) zeigt; und
- Empfangen (707) einer Angabe vom Mediensammelknoten (101), dass die elektronische Vorrichtung (100) zur Medienwiedergabeeinheit (104) zeigt.

9. Verfahren für einen Mediensammelknoten (101), der mit einer elektronischen Vorrichtung (100) und einer lokalen Netzwerkumgebung verbunden ist, zum Handhaben von Medienartikeln, die von einem Benutzer gewählt wurden, in einer vom Benutzer gewählten Medienwiedergabeeinheit (104), die mit der lokalen Netzwerkumgebung verbunden ist, wobei das Verfahren umfasst:
- Senden (901) von Informationen bezüglich veröffentlichter Medienartikel zur elektronischen Vorrichtung (100);
- Empfangen von Informationen (902, 903) von der elektronischen Vorrichtung (100) bezüglich einer Benutzerauswahl einer Medienwiedergabeeinheit und eines Medienartikels;
- Senden (904) eines Befehls zur lokalen Netzwerkumgebung, der die ausgewählte Medienwiedergabeeinheit (104) anweist, den vom Benutzer gewählten Medienartikel wiederzugeben; und
- Senden von Informationen bezüglich der ausgewählten Medienwiedergabeeinheit (104) zur elektronischen Vorrichtung (100), umfassend Informationen (801) bezüglich der Benutzerschnittstelle der ausgewählten Medienwiedergabeeinheit, die ein Anpassen der Benutzerschnittstelle der elektronischen Vorrichtung (100) an die Benutzerschnittstelle der ausgewählten Medienwiedergabeeinheit unter Verwendung der Informationen, die vom Mediensammelknoten (101) empfangen werden, erlauben.

10. Verfahren nach Anspruch 9, wobei das Empfangen von Informationen bezüglich einer Benutzerauswahl einer Medienwiedergabeeinheit und eines Medienartikels umfasst
- Empfangen (705) von Sensordaten, die unter Verwendung der Sensoreinheit (305) gemessen werden, die in der elektronischen Vorrichtung (100) enthalten ist, wobei die gemessenen Sensordaten Informationen umfassen, die angeben, ob die elektronische Vorrichtung (100) im Wesentlichen auf die Medienwiedergabeeinheit (104) zeigt; und
- Bestimmen (706) unter Verwendung der gemessenen Sensordaten, ob die elektronische Vorrichtung (100) im Wesentlichen auf die Medienwiedergabeeinheit (104) zeigt.

11. Verfahren nach Anspruch 10, ferner umfassend:
- Empfangen (702) von Referenzsensordaten aus einer Kalibrierung der relativen Richtung der Medienwiedergabeeinheit (104) von einer Referenzposition der elektronischen Vorrichtung (100) ;
- Speichern (703) der empfangenen Referenzsensordaten in einer Speichereinheit (1003) ;
- Empfangen (705) gemessener Sensordaten von der elektronischen Vorrichtung (100); und
- Vergleichen der gemessenen Sensordaten mit gespeicherten Referenzsensordaten unter Verwendung der Zeigeberechnungseinheit (1001), wobei bestimmt wird, dass die elektronische Vorrichtung (100) im Wesentlichen zur Medienwiedergabeeinheit (104) zeigt, falls die gemessenen Sensordaten im Wesentlichen den Referenzsensordaten entsprechen.

12. Mediensammelknoten (101), der mit einer lokalen Netzwerkumgebung und einer elektronischen Vorrichtung (100) verbunden werden kann und angeordnet ist, Medien zur Wiedergabe in einer Medienwiedergabeeinheit zu veröffentlichen, wobei die Medienwiedergabeeinheit mit einer lokalen Netzwerkumgebung verbunden werden kann, wobei der Mediensammelknoten (101) umfasst:
- eine Kommunikationseinheit (1002) zum Kommunizieren mit der elektronischen Vorrichtung (100), wobei die Kommunikationseinheit angeordnet ist zum:
- Senden von Informationen bezüglich veröffentlichter Medienartikel zur elektronischen Vorrichtung (100);
- Empfangen von Informationen von der elektronischen Vorrichtung (100) bezüglich einer Benutzerauswahl einer Medienwiedergabeeinheit (104) und eines Medienartikels;
- Senden eines Befehls zur lokalen Netzwerkumgebung, der die ausgewählte Medienwiedergabeeinheit anweist, den vom Benutzer gewählten Medienartikel wiederzugeben; und
- Senden von Informationen bezüglich der ausgewählten Medienwiedergabeeinheit (104) zur elektronischen Vorrichtung (100), umfassend Informationen (801) bezüglich der Benutzerschnittstelle der ausgewählten Medienwiedergabeeinheit, die ein Anpassen der Benutzerschnittstelle der elektronischen Vorrichtung (100) an die Benutzerschnittstelle der ausgewählten Medienwiedergabeeinheit unter Verwendung der Informationen, die vom Mediensammelknoten (101) empfangen werden, erlauben.

13. Mediensammelknoten (101) nach Anspruch 12, wobei die Kommunikationseinheit (1002) angeordnet ist, Informationen bezüglich einer Benutzerauswahl einer Medienwiedergabeeinheit (104) und eines Medienartikels zu empfangen durch:
- Empfangen gemessener Sensordaten von der Sensoreinheit (305) der elektronischen Vorrichtung (100), wobei die gemessenen Sensordaten Informationen umfassen, die angeben, ob die elektronische Vorrichtung (100) im Wesentlichen zu einer Medienwiedergabeeinheit (104) zeigt; und
- Bestimmen, unter Verwendung der gemessenen Sensordaten, ob die elektronische Vorrichtung (100) im Wesentlichen zu der Medienwiedergabeeinheit (104) zeigt.

14. Mediensammelknoten (101) nach Anspruch 13, wobei die Kommunikationseinheit (1002) ferner angeordnet ist zum:
- Empfangen von Referenzsensordaten aus einer Kalibrierung der relativen Richtung der Medienwiedergabeeinheit (104) von einer Referenzposition der elektronischen Vorrichtung (100) ;
- Speichern der empfangenen Referenzsensordaten in einer Speichereinheit (1003);
- Empfangen gemessener Sensordaten von der elektronischen Vorrichtung (100); und
- Vergleichen der gemessenen Sensordaten mit gespeicherten Referenzsensordaten unter Verwendung der Zeigeberechnungseinheit (1001), wobei bestimmt wird, dass die elektronische Vorrichtung (100) im Wesentlichen zur Medienwiedergabeeinheit (104) zeigt, falls die gemessenen Sensordaten im Wesentlichen den Referenzsensordaten entsprechen.

## Revendications

1. Procédé pour un dispositif électronique (100) relié à un noeud d'agrégation multimédia (101), pour sélectionner une unité de rendu multimédia (104) reliée à un environnement de réseau local et pour sélectionner des éléments multimédias publiés par le noeud d'agrégation multimédia (101), le procédé comprenant :
- l'affichage (401) d'informations, reçues en provenance du noeud d'agrégation multimédia (101), relatives à des éléments multimédias publiés, sur une unité d'affichage (307) du dispositif électronique (100) ;
- l'enregistrement (402) d'une commande d'entrée d'utilisateur, en utilisant une unité d'entrée d'utilisateur (301), indiquant un élément multimédia sélectionné par un utilisateur ;
- l'enregistrement (403) d'une sélection d'utilisateur d'une unité de rendu multimédia (104) par la détermination, en utilisant une unité de pointage (302), que le dispositif électronique (100) pointe sensiblement vers l'unité de rendu multimédia (104), dans lequel la détermination comprend la mesure (605), en utilisant une unité de détection (305) comprise dans l'unité de pointage (302), de données de détection permettant une détermination du sens de pointage relatif du dispositif électronique (100) et par conséquent vers quelle unité de rendu multimédia (104) pointe l'utilisateur :
- l'envoi (405) d'instructions pour le rendu de l'élément multimédia sélectionné sur l'unité de rendu multimédia sélectionnée au noeud d'agrégation multimédia (101) ;
- la réception (801) d'informations relatives à l'interface utilisateur de l'unité de rendu multimédia sélectionnée (104) en provenance du noeud d'agrégation multimédia (101) ; et
- l'adaptation (802) de l'interface utilisateur affichée sur l'unité d'affichage (307) du dispositif électronique (100) à l'interface utilisateur de l'unité de rendu multimédia sélectionnée (104) en utilisant des informations reçues en provenance du noeud d'agrégation multimédia (101).

2. Procédé selon la revendication 1, comprenant en outre :
- l'étalonnage (601) de la position relative de l'unité de rendu multimédia et d'une ou plusieurs autres unités de rendu multimédia (104) à partir d'une position fixe par la mesure de données de détection de référence pendant que le dispositif électronique (100) est pointé vers chacune de l'unité de rendu multimédia et de l'une ou plusieurs autres unités de rendu multimédia (104) ; et
- la mémorisation des données de détection de référence respectives.

3. Procédé selon la revendication 2, dans lequel la détermination que le dispositif électronique (100) pointe sensiblement vers l'unité de rendu multimédia (104) comprend :
- la comparaison des données de détection de référence mémorisées aux données de détection mesurées pour déterminer vers laquelle des unités de rendu multimédia comprenant l'unité de rendu multimédia et l'une ou plusieurs autres unités de rendu multimédia (104) pointe le dispositif électronique (100).

4. Procédé selon l'une quelconque des revendications 2 et 3, comprenant en outre :
- l'envoi (705) des données de détection de référence au noeud d'agrégation multimédia (101) où elles sont mémorisées ;
- l'envoi des données de détection mesurées au noeud d'agrégation multimédia (101) où elles sont comparées aux données de détection de référence mémorisées pour déterminer vers laquelle des unités de rendu multimédia comprenant l'unité de rendu multimédia et l'une ou plusieurs autres unités de rendu multimédia (104) pointe le dispositif électronique (100) ; et
- la réception (707) d'une indication en provenance du noeud d'agrégation multimédia (101) que le dispositif électronique (100) pointe vers l'unité de rendu multimédia (104).

5. Dispositif électronique (100) agencé pour sélectionner une unité de rendu multimédia (104), pouvant être relié à un environnement de réseau local et pouvant être relié à un noeud d'agrégation multimédia (101) configuré pour publier des éléments multimédias dont le rendu doit être effectué sur l'unité de rendu multimédia (104), le dispositif électronique (100) comprenant :
- une unité de pointage (302), configurée pour effectuer la détermination si le dispositif électronique (100) pointe sensiblement vers l'unité de rendu multimédia (104), dans lequel la détermination comprend la mesure (605), en utilisant une unité de détection (305) comprise dans l'unité de pointage (302), de données de détection permettant une détermination du sens de pointage relatif du dispositif électronique (100) et par conséquent vers quelle unité de rendu multimédia (104) pointe l'utilisateur :
- une unité de communication (303), configurée pour effectuer l'envoi (405) d'instructions pour le rendu d'un élément multimédia sélectionné sur l'unité de rendu multimédia sélectionnée au noeud d'agrégation multimédia (101) et la réception d'informations relatives à l'interface utilisateur de l'unité de rendu multimédia sélectionnée (104) en provenance du noeud d'agrégation multimédia (101) ;
- une unité d'entrée d'utilisateur (301), configurée pour effectuer l'enregistrement de commandes d'entrée d'utilisateur associées à une commande d'éléments multimédias sur l'unité de rendu multimédia sélectionnée par l'utilisateur ;
- une unité d'affichage (307) configurée pour effectuer l'affichage d'une interface utilisateur, dans lequel l'interface utilisateur est adaptée à l'interface utilisateur de l'unité de rendu multimédia sélectionnée (104) en utilisant des informations reçues en provenance du noeud d'agrégation multimédia (101) ; et
dans lequel l'unité de rendu multimédia (104) est sélectionnée en pointant le dispositif électronique (100) vers l'unité de rendu multimédia (104).

6. Dispositif électronique (100) selon la revendication 5, dans lequel l'unité de pointage d'utilisateur (301) est en outre configurée pour effectuer :
- l'étalonnage de la position relative de l'unité de rendu multimédia et d'une ou plusieurs autres unités de rendu multimédia (104) à partir d'une position fixe par la mesure de données de détection de référence pendant que le dispositif électronique (100) est pointé vers chacune de l'unité de rendu multimédia et de l'une ou plusieurs autres unités de rendu multimédia (104) ; et
- la mémorisation des données de détection de référence respectives.

7. Dispositif électronique (100) selon la revendication 6, dans lequel l'unité de pointage (302) est configurée pour effectuer la détermination que le dispositif électronique (100) pointe sensiblement vers l'unité de rendu multimédia par :
- la comparaison des données de détection de référence mémorisées aux données de détection mesurées pour déterminer vers laquelle des unités de rendu multimédia comprenant l'unité de rendu multimédia et l'une ou plusieurs autres unités de rendu multimédia (104) pointe le dispositif électronique (100).

8. Dispositif électronique (100) selon l'une quelconque des revendications 5 à 7, dans lequel l'unité de communication (305) est configurée pour effectuer :
- l'envoi des données de détection mesurées au noeud d'agrégation multimédia (101) où elles sont comparées aux données de détection de référence mémorisées pour déterminer vers laquelle des unités de rendu multimédia comprenant l'unité de rendu multimédia et l'une ou plusieurs autres unités de rendu multimédia (104) pointe le dispositif électronique (100) ; et
- la réception (707) d'une indication en provenance du noeud d'agrégation multimédia (101) que le dispositif électronique (100) pointe vers l'unité de rendu multimédia (104).

9. Procédé pour un noeud d'agrégation multimédia (101) relié à un dispositif électronique (100) et à un environnement de réseau local, pour gérer des éléments multimédias sélectionnés par un utilisateur dans une unité de rendu multimédia sélectionnée par utilisateur (104) reliée à l'environnement de réseau local, le procédé comprenant :
- l'envoi (901) d'informations relatives à des éléments multimédias publiés, au dispositif électronique (100) ;
- la réception d'informations (902, 903), en provenance du dispositif électronique (100), relatives à une sélection d'utilisateur d'une unité de rendu multimédia et d'un élément multimédia ;
- l'envoi (904) d'une commande à l'environnement de réseau local, ordonnant à l'unité de rendu multimédia sélectionnée d'effectuer le rendu de l'élément multimédia sélectionné par l'utilisateur ; et
- l'envoi d'informations relatives à l'unité de rendu multimédia sélectionnée (104) au dispositif électronique (100), comprenant des informations (801) relatives à l'interface utilisateur de l'unité de rendu multimédia sélectionnée, permettant l'adaptation de l'interface utilisateur du dispositif électronique (100) à l'interface utilisateur de l'unité de rendu multimédia sélectionnée en utilisant les informations reçues en provenance du noeud d'agrégation multimédia (101) .

10. Procédé selon la revendication 9, dans lequel la réception d'informations relatives à une sélection d'utilisateur d'une unité de rendu multimédia et d'un élément multimédia comprend :
- la réception (705) de données de détection mesurées en utilisant l'unité de détection (305) comprise dans le dispositif électronique (100), lesdites données de détection mesurées comprenant des informations indiquant si le dispositif électronique (100) pointe sensiblement vers l'unité de rendu multimédia (104) ; et
- la détermination (706), en utilisant les données de détection mesurées, si le dispositif électronique (100) pointe sensiblement vers l'unité de rendu multimédia (104).

11. Procédé selon la revendication 10, comprenant en outre :
- la réception (702) de données de détection de référence en provenance d'un étalonnage du sens respectif de l'unité de rendu multimédia (104) à partir d'une position de référence du dispositif électronique (100) ;
- la mémorisation (703) des données de détection de référence reçues dans une unité de mémorisation (1003) ;
- la réception (705) de données de détection mesurées en provenance du dispositif électronique (100) ; et
- la comparaison (706) des données de détection mesurées aux données de détection de référence mémorisées en utilisant l'unité de calcul de pointage (1001), dans lequel il est déterminé que le dispositif électronique (100) pointe sensiblement vers l'unité de rendu multimédia (104) si les données de détection mesurées correspondent sensiblement aux données de détection de référence.

12. Noeud d'agrégation multimédia (101) pouvant être relié à un environnement de réseau local et à un dispositif électronique (100) et agencé pour publier des éléments multimédias pour un rendu dans une unité de rendu multimédia, ladite unité de rendu multimédia pouvant être reliée à un environnement de réseau local, le noeud d'agrégation multimédia (101) comprenant :
- une unité de communication (1002) pour communiquer avec le dispositif électronique (100), l'unité de communication étant agencée pour effectuer :
- l'envoi d'informations relatives à des éléments multimédias publiés, au dispositif électronique (100) ;
- la réception d'informations, en provenance du dispositif électronique (100), relatives à une sélection d'utilisateur d'une unité de rendu multimédia (104) et d'un élément multimédia ;
- l'envoi d'une commande à l'environnement de réseau local, ordonnant à l'unité de rendu multimédia sélectionnée d'effectuer le rendu de l'élément multimédia sélectionné par l'utilisateur ; et
- l'envoi d'informations relatives à l'unité de rendu multimédia sélectionnée (104) au dispositif électronique (100), comprenant des informations (801) relatives à l'interface utilisateur de l'unité de rendu multimédia sélectionnée, permettant l'adaptation de l'interface utilisateur du dispositif électronique (100) à l'interface utilisateur de l'unité de rendu multimédia sélectionnée en utilisant les informations reçues en provenance du noeud d'agrégation multimédia (101) .

13. Noeud d'agrégation multimédia (101) selon la revendication 12, dans lequel l'unité de communication (1002) est agencée pour effectuer la réception d'informations relatives à une sélection d'utilisateur d'une unité de rendu multimédia (104) et d'un élément multimédia par :
- la réception de données de détection mesurées en provenance de l'unité de détection (305) du dispositif électronique (100), les données de détection mesurées comprenant des informations indiquant si le dispositif électronique (100) pointe sensiblement vers l'unité de rendu multimédia ; et
- la détermination, en utilisant les données de détection mesurées, si le dispositif électronique (100) pointe sensiblement vers l'unité de rendu multimédia (104).

14. Noeud d'agrégation multimédia (101) selon la revendication 13, dans lequel l'unité de communication (1002) est en outre agencée pour effectuer :
- la réception de données de détection de référence en provenance d'un étalonnage du sens relatif de l'unité de rendu multimédia (104) à partir d'une position de référence du dispositif électronique (100) ;
- la mémorisation des données de détection de référence reçues dans une unité de mémorisation (1003) ;
- la réception de données de détection mesurées en provenance du dispositif électronique (100) ; et
- la comparaison des données de détection mesurées aux données de détection de référence mémorisées en utilisant l'unité de calcul de pointage (1001), dans lequel il est déterminé que le dispositif électronique (100) pointe sensiblement vers l'unité de rendu multimédia (104) si les données de détection mesurées correspondent sensiblement aux données de détection de référence.
